# EUROPEAN PATENT APPLICATION

(11) **EP 4 513 983 A1**
(43) Date of publication of application: **26.02.2025**
(21) Application number: 23806512.2
(22) Date of filing: 20.01.2023
(51) Int. Cl.: H04W 52/02

(54) **CONTROL METHOD FOR POSITIONING TRACKING APPARATUS, POSITIONING TRACKING APPARATUS, AND STORAGE MEDIUM**

(30) Priority: 16.05.2022 CN 202210530652
(71) Applicant: ZTE Corporation, Shenzhen, Guangdong 518057 (CN)
(72) Inventor: TIAN, Jun, Shenzhen, Guangdong 518057 (CN)
(74) Representative: Pennacchio, Salvatore Giovanni
(86) International application number: PCT/CN2023/073432
(87) International publication number: WO 2023/221550

(57) **Abstract**

The present disclosure relates to the field of positioning tracking. Provided are a control method for a positioning tracking apparatus, a positioning tracking apparatus and a storage medium. The method comprises: when a positioning tracking apparatus starts to transmit data to be transmitted, determining a duration required for transmitting the data to be transmitted; in a case where the duration is greater than or equal to a preset duration threshold, determining, according to the duration, a target duration for which the positioning tracking apparatus is in a standby mode, the target duration being less than or equal to the duration required for transmitting the data to be transmitted; controlling the positioning tracking apparatus to switch from a working mode to the standby mode in which mode the positioning tracking apparatus does not interrupt the transmission of the data to be transmitted; and when the duration for which the positioning tracking apparatus is in the standby mode reaches the target duration, controlling the positioning tracking apparatus to switch from the standby mode to the working mode.

## Description

### Cross-Reference to Related Application

The present disclosure claims priority to Chinese Patent Application No. CN 202210530652.0, filed on May 16, 2022 and entitled "Control Method for Positioning Tracking Apparatus, Positioning Tracking Apparatus and Storage Medium", which is incorporated herein by reference in its entirety.

### Technical Field

The present disclosure relates to the technical field of positioning tracking, and in particular, to a control method for a positioning tracking apparatus, a positioning tracking apparatus and a storage medium.

### Background

At present, a positioning tracking apparatus has the function of transmitting positioning data, network data and the like to a bound terminal device, and is widely applied to different fields. However, the volume of the positioning tracking apparatus is small, the battery capacity is limited, the power consumption when the positioning tracking apparatus is in a working mode is large, and the endurance time of the positioning tracking apparatus is short. Therefore, how to improve the endurance time of the positioning tracking apparatus is a technical problem to be solved urgently at present.

### Summary

Some embodiments of the present disclosure provide a control method for a positioning tracking apparatus, a control device for the positioning tracking apparatus, and a storage medium, aiming to solve the technical problem of how to improve the endurance time of the positioning tracking apparatus.

According to a first aspect, some embodiments of the present disclosure provide a control method for a positioning tracking apparatus, comprising: when the positioning tracking apparatus starts to transmit data to be transmitted, determining a duration required for transmitting the data to be transmitted; in a case where the duration is greater than or equal to a preset duration threshold, determining, according to the duration, a target duration for which the positioning tracking apparatus is in a standby mode, the target duration being less than or equal to the duration required for transmitting the data to be transmitted; controlling the positioning tracking apparatus to switch from a working mode to the standby mode in which mode the positioning tracking apparatus does not interrupt the transmission of the data to be transmitted; and when the duration for which the positioning tracking apparatus is in the standby mode reaches the target duration, controlling the positioning tracking apparatus to switch from the standby mode to the working mode.

According to a second aspect, some embodiments of the present disclosure further provide a positioning tracking apparatus. The positioning tracking apparatus comprises a processor, a memory, a computer program stored on the memory and executable by the processor, and a data bus for implementing connection and communication between the processor and the memory. The computer program is configured to, when executed by the processor, implements any control method for a positioning tracking apparatus provided in the description of the present disclosure.

According to a third aspect, some embodiments of the present disclosure further provide a storage medium for computer-readable storage, one or more programs are stored in the computer-readable storage medium, wherein the computer program is configured to,when executed by one or more processors to implement any control method for a positioning tracking apparatus provided in the description of the present disclosure.

### Brief Description of the Drawings

In order to describe the technical solutions of the present disclosure more clearly, hereinafter, accompanying drawings requiring to be used for describing the embodiments are introduced briefly. Apparently, the accompanying drawings in the following description relate to some embodiments of the present disclosure, and for a person of ordinary skill in the art, other accompanying drawings can also be obtained according to these accompanying drawings without involving any inventive effort.
Fig. 1 is a schematic diagram of a scenario for implementing a control method for a positioning tracking apparatus provided according to embodiments of the present disclosure;
Fig. 2 is a schematic flowchart of a control method for a positioning tracking apparatus provided according to embodiments of the present disclosure;
Fig. 3 is a schematic flowchart of sub-steps of a control method for a positioning tracking apparatus in Fig. 1;
Fig. 4 is schematic flowchart of another control method for a positioning tracking apparatus provided according to embodiments of the present disclosure; and
Fig. 5 is a schematic structural block diagram of a positioning tracking apparatus provided according to embodiments of the present disclosure.

### Detailed Description of the Embodiments

Hereinafter, the technical solutions in the embodiments of the present disclosure will be described clearly and completely with reference to the accompanying drawings of the embodiments of the present disclosure. Obviously, the embodiments as described are some of the embodiments of the present disclosure, and are not all of the embodiments. All other embodiments obtained by a person of ordinary skill in the art on the basis of the embodiments of the present disclosure without involving any inventive effort all fall within the scope of protection of the present disclosure.

The flowcharts shown in the accompanying drawings are only illustrative, do not necessarily comprise all the content and operations/steps, nor do they have to be executed in the order described. For example, some operations/steps may be broken down, combined, or partially combined, and therefore the actual execution order may vary according to actual situations.

It should be understood that the terminologies used in this disclosure are for the purpose of describing particular embodiments only and are not intended to limit the present disclosure. As used in the description and the appended claims of the present disclosure, the singular forms "a", "an" and "the" are intended to comprise plural forms as well, unless the context clearly indicates exceptions.

At present, a positioning tracking apparatus has the function of transmitting, to a bound terminal device, data to be transmitted, and is widely applied to different fields. However, the volume of the positioning tracking apparatus is small, the battery capacity is limited, the power consumption when the positioning tracking apparatus is in a working mode is large, and the endurance time of the positioning tracking apparatus is short. Therefore, how to improve the endurance time of the positioning tracking apparatus is a problem to be solved urgently at present.

In order to solve the described problem, some embodiments of the present disclosure provide a control method for a positioning tracking apparatus, a positioning tracking apparatus and a storage medium. According to the control method, when a positioning tracking apparatus starts to transmit data to be transmitted, if a duration required for transmitting the data to be transmitted is greater than or equal to a preset duration threshold, a target duration for which the positioning tracking apparatus is in a standby mode is determined according to the duration required for transmitting the data to be transmitted, and the positioning tracking apparatus is controlled to be in the standby mode in which mode the positioning tracking apparatus can still transmit the data to be transmitted; and when the duration for which the positioning tracking apparatus is in the standby mode reaches the target duration, the positioning tracking apparatus is controlled to switch from the standby mode to a working mode. In this way, in the process of transmitting the data to be transmitted, the positioning tracking apparatus is maintained in the standby mode, so that power consumption is reduced, and thus the endurance time of the positioning tracking apparatus can be greatly improved.

Hereinafter, some embodiments of the present disclosure will be described in detail in combination with the accompanying drawings. The following embodiments and features in the embodiments may be combined with one another without conflicts.

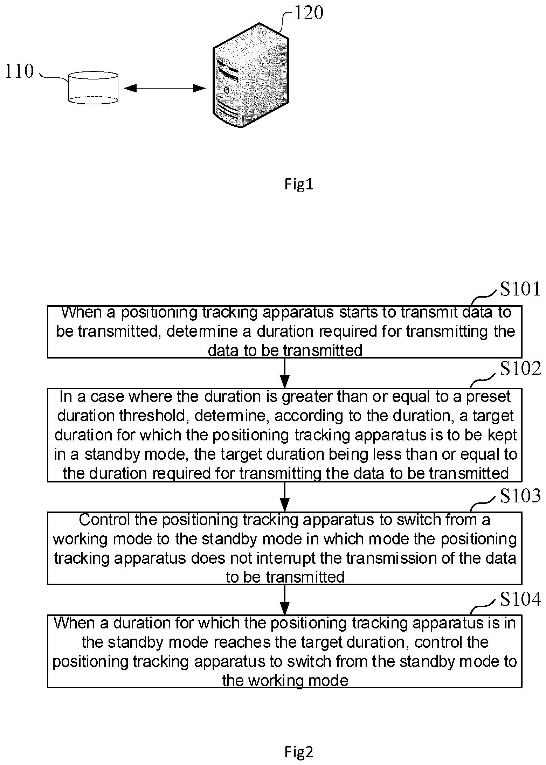

Please refer to Fig. 1, Fig. 1 is a schematic diagram of a scenario for implementing a control method for a positioning tracking apparatus provided according to embodiments of the present disclosure.

As shown in Fig. 1, the scenario comprises a positioning tracking apparatus 110 and an external device 120, and the positioning tracking apparatus 110 can transmit data to the external device 120. If the positioning tracking apparatus 110 is in a working mode, when the positioning tracking apparatus 110 starts to transmit, to the external device 120, data to be transmitted, a duration required for transmitting the data to be transmitted is determined; if the duration required for transmitting the data to be transmitted is greater than or equal to a preset duration threshold, a target duration for which the positioning tracking apparatus is in a standby mode is determined according to the duration required for transmitting the data to be transmitted, the target duration being less than or equal to the duration required for transmitting the data to be transmitted; the mode of the positioning tracking apparatus 110 is switched from the working mode to the standby mode in which mode the positioning tracking apparatus 110 does not interrupt the transmission of data to be transmitted; and when the duration for which the positioning tracking apparatus is in the standby mode reaches the target duration, the mode of the positioning tracking apparatus 110 is switched from the standby mode to the working mode.

The external device 120 may be a terminal device, and may also be a server. The terminal device may comprise a mobile phone, a tablet computer, a notebook computer, a personal computer, and the like. The server may be a standalone server or a server cluster composed of a plurality of servers, or may also be a cloud server providing infrastructure cloud computing services such as cloud services, cloud databases, cloud computing, cloud functions, cloud storage, network services, cloud communications, middleware services, domain name services, security services, content delivery networks (CDNs), as well as big data and artificial intelligence platforms.

Please refer to Fig. 2, Fig. 2 is a schematic flowchart of a control method for a positioning tracking apparatus provided according to embodiments of the present disclosure.

As shown in Fig. 2, the control method for a positioning tracking apparatus comprises steps S101 to S104.

At step S101, when a positioning tracking apparatus starts to transmit data to be transmitted, a duration required for transmitting the data to be transmitted is determined.

The positioning tracking apparatus comprises a data transmission unit and a control unit. The data transmission unit is a hardware unit for data transmission, and the data transmission unit performs data transmission in a hardware-based manner in a data transmission process, independent of software functionality. Therefore, the data transmission unit is decoupled from the control unit, and the data transmission unit can independently complete data transmission tasks, without depending on the control of the control unit, such that after the positioning tracking apparatus is in a standby mode, the data transmission unit can still transmit data.

The positioning tracking apparatus may comprise, but is not limited to, a Beidou satellite-based positioning tracking apparatus, a global positioning system (GPS)-based positioning tracking apparatus, and a real-time kinematic (RTK)-based positioning tracking apparatus. The data to be transmitted may comprise positioning data and network data, and the positioning data may comprise GPS positioning data, Beidou positioning data or RTK positioning data. The positioning tracking apparatus can transmit, to an external device, the data to be transmitted.

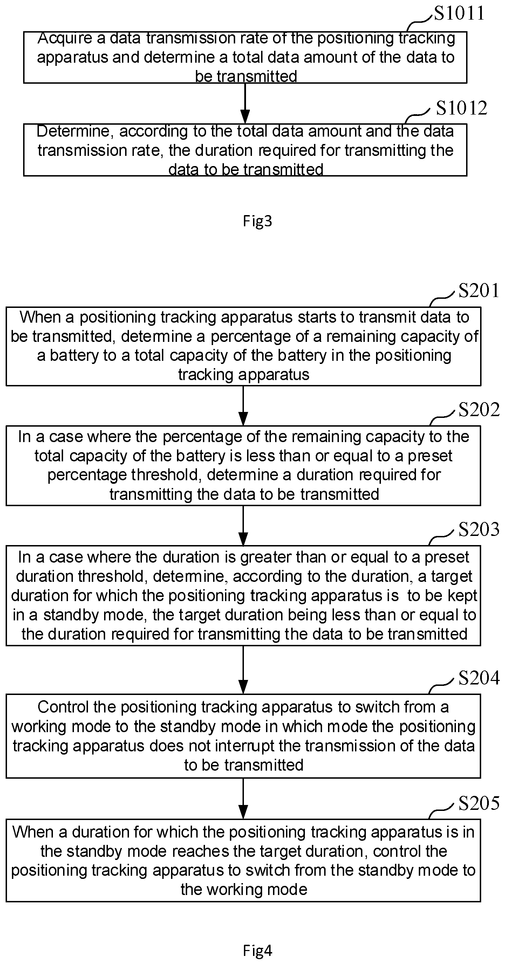

In some embodiments, as shown in Fig. 3, step S101 comprises: sub-steps S1011 to S1012.

At sub-step S1011, a data transmission rate of the positioning tracking apparatus is acquired and a total data amount of the data to be transmitted is determined.

The data transmission rate of the positioning tracking apparatus can be determined according to a data transmission rate limit value of the positioning tracking apparatus and a previous data transmission rate of the positioning tracking apparatus, and the previous data transmission rate is a data transmission rate at which the positioning tracking apparatus previously transmits data to be transmitted.

In some embodiments, the data transmission rate limit value of the positioning tracking apparatus and the previous data transmission rate of the positioning tracking apparatus are acquired, the previous data transmission rate being a data transmission rate at which the positioning tracking apparatus previously transmits data to be transmitted; and the data transmission rate of the positioning tracking apparatus is determined according to the data transmission rate limit value and the previous data transmission rate. The data transmission rate limit value of the positioning tracking apparatus is related to the performance of the data transmission unit in the positioning tracking apparatus, and the data transmission rate limit value is the maximum data transmission rate of the data transmission unit. By means of the data transmission rate limit value and the previous data transmission rate, the data transmission rate of the positioning tracking apparatus can be accurately determined, so that the accuracy of estimating a duration required for transmitting data to be transmitted can be improved.

In some exemplary embodiments, a difference value between the data transmission rate limit value and the previous data transmission rate is calculated to obtain a data transmission rate difference value; and in a case where the data transmission rate difference value is less than or equal to a preset difference value threshold, the previous data transmission rate is determined as the data transmission rate of the positioning tracking apparatus. The preset difference value threshold may be set on the basis of actual situations, which is not specifically limited in the embodiments of the present disclosure. In cases where the difference between the data transmission rate limit value and the previous data transmission rate is relatively small, the previous data transmission rate is used for data transmission, so that the step of rate adjustment is eliminated, and thus the power consumption can be reduced.

In some exemplary embodiments, if the data transmission rate difference value is greater than the preset difference value threshold, a gain value of the previous data transmission rate is determined according to the data transmission rate difference value; and the previous data transmission rate and the gain value of the previous data transmission rate are accumulated to obtain the data transmission rate of the positioning tracking apparatus. In cases where the difference between the data transmission rate limit value and the previous data transmission rate is relatively large, the data transmission rate is adjusted on the basis of the previous data transmission rate, so that the performance utilization rate of the data transmission unit can be improved, and data can also be transmitted more quickly, so as to reduce power consumption and improve endurance time.

In some exemplary embodiments, the method for determining the gain value of the previous data transmission rate according to the data transmission rate difference value may comprise: determining a preset rate difference value range within which the data transmission rate difference value is located; and querying a preset mapping relationship table for a gain value corresponding to the preset rate difference value range within which the data transmission rate difference value is located, and determining the found gain value as the gain value of the previous data transmission rate. The preset mapping relationship table stores different preset rate difference value ranges and gain values respectively corresponding to the different preset rate difference value ranges.

At sub-step S1012, the duration required for transmitting the data to be transmitted is determined according to the total data amount and the data transmission rate.

For example, if the total data amount of the data to be transmitted is 5 megabytes and the data transmission rate is 1 megabyte per second, it can be estimated that the duration required for transmitting the data to be transmitted is 5 seconds.

At step S102, if the duration is greater than or equal to a preset duration threshold, a target duration for which the positioning tracking apparatus is in a standby mode is determined according to the duration, the target duration being less than or equal to the duration required for transmitting the data to be transmitted.

The target duration for which the positioning tracking apparatus is in the standby mode is determined according to the duration required for transmitting the data to be transmitted, and the target duration is less than or equal to the duration required for transmitting the data to be transmitted. In this way, it can be ensured that the positioning tracking apparatus is waken up in time when or before data transmission is completed, such that the positioning tracking apparatus is in a working mode.

In some exemplary embodiments, a product of the duration required for transmitting the data to be transmitted and a preset percentage is calculated, and the product of the duration required for transmitting the data to be transmitted and the preset percentage is determined as the target duration for which the positioning tracking apparatus is in the standby mode. The preset percentage is less than 1, and the preset percentage may be set on the basis of actual situations, which is not specifically limited in the embodiments. For example, if the preset percentage is 90%, and the duration required for transmitting the data to be transmitted is 5 seconds, the target duration for which the positioning tracking apparatus is in the standby mode is 4.5 seconds.

At step S103, the positioning tracking apparatus is controlled to switch from a working mode to the standby mode in which mode the positioning tracking apparatus does not interrupt the transmission of the data to be transmitted.

In the working mode, various modules in the positioning tracking apparatus work normally; and in the standby mode, most modules in the positioning tracking apparatus stop working. If the duration required for transmitting the data to be transmitted is greater than or equal to the preset duration threshold, it can be determined that the duration required for transmitting the data to be transmitted is long. In this case, the positioning tracking apparatus is controlled to switch from the working mode to the standby mode in which mode the positioning tracking apparatus does not interrupt the transmission of the data to be transmitted, so that the stability of data transmission can be ensured, and the power consumption of the positioning tracking apparatus can also be reduced, thereby improving the endurance time of the positioning tracking apparatus.

The preset duration threshold is determined according to a sum of a duration required for the positioning tracking apparatus to enter the standby mode and a duration required for the positioning tracking apparatus to exit the standby mode. In some exemplary embodiments, the preset duration threshold is greater than or equal to the sum of the duration required for the positioning tracking apparatus to enter the standby mode and the duration required for the positioning tracking apparatus to exit the standby mode. For example, if the duration required for the positioning tracking apparatus to enter the standby mode is 2 seconds and the duration required for the positioning tracking apparatus to exit the standby mode is 2 seconds, the preset duration threshold may be configured to be 4 seconds. If the duration required for transmitting the data to be transmitted is greater than or equal to the sum of the duration required for the positioning tracking apparatus to enter the standby mode and the duration required for the positioning tracking apparatus to exit the standby mode, the situation that the positioning tracking apparatus is still in the standby mode after data transmission is completed can be prevented, and frequent switching between the working mode and the standby mode can also be avoided.

In some exemplary embodiments, the duration required for the positioning tracking apparatus to enter the standby mode and the duration required for the positioning tracking apparatus to exit the standby mode are accumulated to obtain an accumulated duration value; and an addition operation is performed on the accumulated duration value and the preset gain value to obtain the preset duration threshold. For example, if the duration required for the positioning tracking apparatus to enter the standby mode is 2 seconds, the duration required for the positioning tracking apparatus to exit the standby mode is 2 seconds, and the preset gain value is 0.5 seconds, the preset duration threshold may be configured to be 4.5 seconds.

In some embodiments, if the duration required for transmitting the data to be transmitted is less than the preset duration threshold, the positioning tracking apparatus does not switch the mode and maintains the working mode. If the duration required for transmitting the data to be transmitted is less than the preset duration threshold, the positioning tracking apparatus does not switch the mode and maintains the working mode, so that frequent switching between the working mode and the standby mode can be avoided.

At step S104, when the duration for which the positioning tracking apparatus is in the standby mode reaches the target duration, the positioning tracking apparatus is controlled to switch from the standby mode to the working mode.

When the duration for which the positioning tracking apparatus is in the standby mode does not reach the target duration, the mode of the positioning tracking apparatus is not switched, and the standby mode is maintained. For example, if the target duration is 4.5 seconds, and the duration for which the positioning tracking apparatus is in the standby mode is 4 seconds, the mode of the positioning tracking apparatus is not switched and the standby mode is maintained; and if the duration for which the positioning tracking apparatus is in the standby mode is 4.5 seconds, the positioning tracking apparatus is controlled to switch from the standby mode to the working mode.

According to the control method for a positioning tracking apparatus provided in the embodiments, when the positioning tracking apparatus starts to transmit data to be transmitted, if a duration required for transmitting the data to be transmitted is greater than or equal to a preset duration threshold, the positioning tracking apparatus is controlled to be in a standby mode in which mode the positioning tracking apparatus can still transmit the data to be transmitted, then a target duration for which the positioning tracking apparatus is in the standby mode is determined according to the duration required for transmitting the data to be transmitted, and the positioning tracking apparatus is controlled to switch from the standby mode to a working mode when the duration for which the positioning tracking apparatus is in the standby mode reaches the target duration. In this way, in the process of transmitting the data to be transmitted, the positioning tracking apparatus is maintained in the standby mode, so that power consumption is reduced, and thus the endurance time of the positioning tracking apparatus can be greatly improved.

Please refer to Fig. 4, Fig. 4 is schematic flowchart of another control method for a positioning tracking apparatus provided according to embodiments of the present disclosure.

As shown in Fig. 4, the control method for a positioning tracking apparatus comprises steps S201 to S205.

At step S201, when a positioning tracking apparatus starts to transmit data to be transmitted, a percentage of a remaining capacity of a battery to a total capacity of the battery in the positioning tracking apparatus is determined.

The positioning tracking apparatus comprises a battery, and the battery is used for supplying power to the positioning tracking apparatus. The battery may be a lithium battery, and may also be other batteries, which is not specifically limited in the embodiments of the present disclosure. The remaining capacity of the battery in the positioning tracking apparatus is the remaining battery capacity.

In some exemplary embodiments, when the positioning tracking apparatus starts to transmit, to an external device, the data to be transmitted, the remaining battery capacity in the positioning tracking apparatus is acquired in real time to obtain the remaining capacity of the battery, and the total capacity of the battery is acquired; and the percentage of the remaining capacity to the total capacity of the battery in the positioning tracking apparatus is calculated.

At step S202, if the percentage of the remaining capacity to the total capacity of the battery is less than or equal to a preset percentage threshold, a duration required for transmitting the data to be transmitted is determined.

If the percentage of the remaining capacity to the total capacity of the battery is greater than the preset percentage threshold, the mode of the positioning tracking apparatus is not switched, and the working mode is maintained. The preset percentage threshold may be set on the basis of actual situations, which is not specifically limited in the embodiments of the present disclosure. For example, the preset percentage threshold is 60%, and if the percentage of the remaining capacity of the battery to the total capacity of the battery in the positioning tracking apparatus is 55%, the duration required for transmitting the data to be transmitted is determined.

At step S203, if the duration is greater than or equal to a preset duration threshold, a target duration for which the positioning tracking apparatus is in a standby mode is determined according to the duration, the target duration being less than or equal to the duration required for transmitting the data to be transmitted.

In some exemplary embodiments, a product of the duration required for transmitting the data to be transmitted and a preset percentage is calculated, and the product of the duration required for transmitting the data to be transmitted and the preset percentage is determined as the target duration for which the positioning tracking apparatus is in the standby mode.

At step S204, the positioning tracking apparatus is controlled to switch from a working mode to the standby mode in which mode the positioning tracking apparatus does not interrupt the transmission of the data to be transmitted.

In the working mode, various modules in the positioning tracking apparatus work normally; and in the standby mode, most modules in the positioning tracking apparatus stop working. The preset duration threshold is determined according to a sum of a duration required for the positioning tracking apparatus to enter the standby mode and a duration required for the positioning tracking apparatus to exit the standby mode.

At step S205, when the duration for which the positioning tracking apparatus is in the standby mode reaches the target duration, the positioning tracking apparatus is controlled to switch from the standby mode to the working mode.

When the duration for which the positioning tracking apparatus is in the standby mode does not reach the target duration, the mode of the positioning tracking apparatus is not switched, and the standby mode is maintained. For example, if the target duration is 5 seconds, and the duration for which the positioning tracking apparatus is in the standby mode is 4.5 seconds, the mode of the positioning tracking apparatus is not switched and the standby mode is maintained; and if the duration for which the positioning tracking apparatus is in the standby mode is 5 seconds, the positioning tracking apparatus is controlled to switch from the standby mode to the working mode.

According to the control method for a positioning tracking apparatus provided in the embodiments, when the positioning tracking apparatus starts to transmit data to be transmitted, a percentage of the remaining capacity of a battery to the total capacity of the battery in the positioning tracking apparatus is determined, and if the percentage is less than or equal to a preset percentage threshold, determining a duration required for transmitting the data to be transmitted; then, if the duration required for transmitting the data to be transmitted is greater than or equal to a preset duration threshold, a target duration for which the positioning tracking apparatus is in a standby mode is determined on the basis of the duration required for transmitting the data to be transmitted, and the positioning tracking apparatus is controlled to switch from a working mode to the standby mode in which mode the positioning tracking apparatus does not interrupt the transmission of the data to be transmitted; finally, when the duration for which the positioning tracking apparatus is in the standby mode reaches the target duration, the positioning tracking apparatus is controlled to switch from the standby mode to the working mode. In this way, the frequency of switching between the standby mode and the working mode can be reduced, and at the same time, in the process of transmitting the data to be transmitted, the positioning tracking apparatus is maintained in the standby mode, so that power consumption is reduced, and thus the endurance time of the positioning tracking apparatus can be greatly improved.

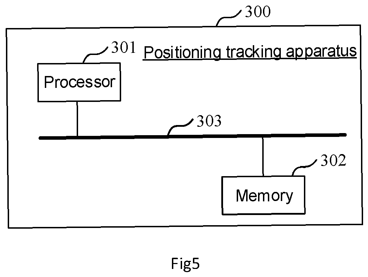

Please refer to Fig. 5, Fig. 5 is a schematic structural block diagram of a positioning tracking apparatus provided according to embodiments of the present disclosure.

As shown in Fig. 5, the positioning tracking apparatus 300 comprises a processor 301 and a memory 302. The processor 301 and the memory 302 are connected by means of a bus 303, and the bus is, for example, an I2C (Inter-integrated Circuit) bus.

In some exemplary embodiments, the processor 301 is used for providing computing and control capabilities, and supporting operation of the entire positioning tracking apparatus 300. The processor 301 may be a central processing unit (CPU), and the processor 301 may also be another general-purpose processor, digital signal processor (DSP), application specific integrated circuit (ASIC), field-programmable gate array (FPGA), or another programmable logic device, discrete gate or transistor logic device, discrete hardware component, or the like. The general-purpose processor may be a microprocessor; alternatively, the processor may also be any conventional processor, and the like.

In some exemplary embodiments, the memory 302 may be a Flash chip, a read-only memory (ROM) disk, an optical disk, a USB flash disk, a mobile hard disk, or the like.

A person of ordinary skill in the art would understand that the structure shown in Fig. 5 is only a block diagram of a partial structure related to the solutions of the present disclosure, and does not constitute a limitation to the positioning tracking apparatus to which the solutions of the present disclosure are applied. A specific positioning tracking apparatus 300 may comprise more or fewer components than those shown in the figure, or combine some components, or have different component arrangements.

The processor is used for running a computer program stored in the memory, and implementing, when executing the computer program, any control method for the positioning tracking apparatus according to embodiments of the present disclosure.

In some embodiments, the processor is used for running a computer program stored in the memory, and implement, when executing the computer program, the following steps: when a positioning tracking apparatus starts to transmit data to be transmitted, determining a duration required for transmitting the data to be transmitted; if the duration is greater than or equal to a preset duration threshold, determining, according to the duration, a target duration for which the positioning tracking apparatus is in a standby mode, the target duration being less than or equal to the duration required for transmitting the data to be transmitted; controlling the positioning tracking apparatus to switch from a working mode to the standby mode in which mode the positioning tracking apparatus does not interrupt the transmission of the data to be transmitted; and when the duration for which the positioning tracking apparatus is in the standby mode reaches the target duration, controlling the positioning tracking apparatus to switch from the standby mode to the working mode.

In some embodiments, the preset duration threshold is determined according to a sum of a duration required for the positioning tracking apparatus to enter the standby mode and a duration required for the positioning tracking apparatus to exit the standby mode.

In some embodiments, when implementing determination, according to the duration, of the target duration for which the positioning tracking apparatus is in the standby mode, the processor is used for implementing: calculating a product of the duration and a preset percentage, and determining the product of the duration and the preset percentage as the target duration for which the positioning tracking apparatus is in the standby mode.

In some embodiments, when implementing determination of the duration required for transmitting the data to be transmitted, the processor is used for implementing: acquiring a data transmission rate of the positioning tracking apparatus and determining a total data amount of the data to be transmitted; and determining, according to the total data amount and the data transmission rate, the duration required for transmitting the data to be transmitted.

In some embodiments, when implementing acquisition of the data transmission rate of the positioning tracking apparatus, the processor is used for implementing: acquiring a data transmission rate limit value of the positioning tracking apparatus and a previous data transmission rate of the positioning tracking apparatus, the previous data transmission rate being a data transmission rate at which the positioning tracking apparatus previously transmits data to be transmitted; and determining the data transmission rate of the positioning tracking apparatus according to the data transmission rate limit value and the previous data transmission rate.

In some embodiments, when implementing determination of the data transmission rate of the positioning tracking apparatus according to the data transmission rate limit value and the previous data transmission rate, the processor is used for implementing: calculating a difference value between the data transmission rate limit value and the previous data transmission rate to obtain a data transmission rate difference value; and in a case where the data transmission rate difference value is less than or equal to a preset difference value threshold, determining the previous data transmission rate as the data transmission rate of the positioning tracking apparatus.

In some embodiments, after implementing calculation of the difference value between the data transmission rate limit value and the previous data transmission rate to obtain the data transmission rate difference value, the processor is further used for implementing: if the data transmission rate difference value is greater than the preset difference value threshold, determining a gain value of the previous data transmission rate according to the data transmission rate difference value; and accumulating the previous data transmission rate and the gain value of the previous data transmission rate to obtain the data transmission rate of the positioning tracking apparatus.

In some embodiments, before implementing determination of the duration required for transmitting the data to be transmitted, the processor is further used for implementing: when the positioning tracking apparatus starts to transmit the data to be transmitted, determining a percentage of the remaining capacity of a battery to the total capacity of the battery in the positioning tracking apparatus; and if the percentage of the remaining capacity to the total capacity of the battery is less than or equal to a preset percentage threshold, determining the duration required for transmitting the data to be transmitted.

It should be noted that, a person skilled in the art would have been able to clearly understand that, to make the description convenient and brief, for a specific working process of the positioning tracking apparatus described above, reference can be made to the corresponding process in the embodiments of the control method for a positioning tracking apparatus above, and they will not be repeated herein.

Some embodiments of the present disclosure further provide a storage medium for computer-readable storage, the storage medium storing one or more programs which can be executed by one or more processors to implement any control method for a positioning tracking apparatus provided in the description of the present disclosure.

The storage medium may be an internal storage unit of the positioning tracking apparatus described in the embodiments above, for example, a hard disk or a memory of the positioning tracking apparatus. The storage medium may also be an external storage device of the positioning tracking apparatus, for example, a plug-in hard disk, a smart media card (SMC), a secure digital (SD) card, and a flash card that are equipped on the positioning tracking apparatus.

A person of ordinary skill in the art would understand that all or some of the steps of the methods disclosed above, and functional modules/units in systems and apparatuses can be implemented as software, firmware, hardware and any suitable combination thereof. In hardware embodiments, the division between functional modules/units referred to in the description above does not necessarily correspond to the division of physical components. For example, one physical component may have multiple functions, or one function or step may be cooperatively executed by several physical components. Some or all of the physical components may be implemented as software executed by a processor, such as a central processing unit, a digital signal processor, or a microprocessor, or implemented as hardware, or implemented as an integrated circuit, such as an application specific integrated circuit. Such software may be distributed on a computer-readable medium which may comprise a computer storage medium (or a non-transitory medium) and a communication medium (or a transitory medium). As is well known to a person of ordinary skill in the art, the term of computer storage medium comprises transitory and non-transitory, removable and non-removable media implemented in any method or technology for storage of information (such as computer-readable instructions, data structures, program modules, or other data). The computer storage medium comprises, but is not limited to, RAM, ROM, EEPROM, flash memory or other memory technology, CD-ROM, digital versatile disk (DVD) or other optical disk storage, magnetic cassette, magnetic tape, magnetic disk storage or other magnetic storage apparatuses, or any other medium which can be used to store desired information and can be accessed by a computer. In addition, it is well known to a person of ordinary skill in the art that the communication medium typically comprises computer-readable instructions, data structures, program modules, or other data in a modulated data signal such as a carrier or other transport mechanisms, and may comprise any information delivery medium.

Some embodiments of the present disclosure provide a control method for a positioning tracking apparatus, a control device for the positioning tracking apparatus and a storage medium. According to the control method for the positioning tracking apparatus, when the positioning tracking apparatus starts to transmit data to be transmitted, if a duration required for transmitting the data to be transmitted is greater than or equal to a preset duration threshold, a target duration for which the positioning tracking apparatus is in a standby mode is determined according to the duration required for transmitting the data to be transmitted, and the positioning tracking apparatus is controlled to be in the standby mode in which mode the positioning tracking apparatus can still transmit the data to be transmitted; and when the duration for which the positioning tracking apparatus is in the standby mode reaches the target duration, the positioning tracking apparatus is controlled to switch from the standby mode to a working mode. In this way, in the process of transmitting the data to be transmitted, the positioning tracking apparatus is maintained in the standby mode, so that power consumption is reduced, and thus the endurance time of the positioning tracking apparatus can be greatly improved.

It should be understood that the term "and/or" used in the description and the appended claims of the present disclosure refers to, and comprises, any and all possible combinations of one or more of the associated items listed these combinations. It should be noted that in the present text, the terms "comprise", "comprising", or any other variations thereof are intended to cover a non-exclusive inclusion, so that a process, a method, an article, or a system that comprises a series of elements not only comprises those elements, but further comprises other elements that are not explicitly listed, or further comprises inherent elements of the process, the method, the article, or the system. Without further limitation, an element defined by a sentence "comprising a ..." does not exclude other same elements existing in the process, the method, the article, or the system that comprises the element.

The serial numbers in the embodiments of the present disclosure are only for description, and do not represent the preference of the embodiments. The content above only relates to specific embodiments of the present disclosure, and the scope of protection of the present disclosure is not limited thereto. Any equivalent modification or replacement would have been readily conceivable to a person skilled in the art within the technical scope disclosed in the present disclosure, and these modifications or replacements shall fall within the scope of protection of the present disclosure. Therefore, the scope of protection of the present disclosure shall be subject to the scope of protection of the claims.

## Claims

1. A control method for a positioning tracking apparatus, comprising:
when the positioning tracking apparatus starts to transmit data to be transmitted, determining a duration required for transmitting the data to be transmitted;
in a case where the duration is greater than or equal to a preset duration threshold, determining, according to the duration, a target duration for which the positioning tracking apparatus is to be kept in a standby mode, the target duration being less than or equal to the duration required for transmitting the data to be transmitted;
controlling the positioning tracking apparatus to switch from a working mode to the standby mode in which mode the positioning tracking apparatus does not interrupt the transmission of the data to be transmitted; and
when a duration for which the positioning tracking apparatus is in the standby mode reaches the target duration, controlling the positioning tracking apparatus to switch from the standby mode to the working mode.

2. The control method according to claim 1, wherein the preset duration threshold is determined according to a sum of a duration required for the positioning tracking apparatus to enter the standby mode and a duration required for the positioning tracking apparatus to exit the standby mode.

3. The control method according to claim 1, wherein determining, according to the duration, the target duration for which the positioning tracking apparatus is in the standby mode comprises:
calculating a product of the duration and a preset percentage, and determining the product of the duration and the preset percentage as the target duration for which the positioning tracking apparatus is to be kept in the standby mode.

4. The control method according to any one of claims 1-3, wherein determining the duration required for transmitting the data to be transmitted comprises:
acquiring a data transmission rate of the positioning tracking apparatus and determining a total data amount of the data to be transmitted; and
determining, according to the total data amount and the data transmission rate, the duration required for transmitting the data to be transmitted.

5. The control method according to claim 4, wherein acquiring the data transmission rate of the positioning tracking apparatus comprises:
acquiring a data transmission rate limit value of the positioning tracking apparatus and a previous data transmission rate of the positioning tracking apparatus, the previous data transmission rate being a data transmission rate at which the positioning tracking apparatus previously transmits data to be transmitted; and
determining the data transmission rate of the positioning tracking apparatus according to the data transmission rate limit value and the previous data transmission rate.

6. The control method according to claim 5, wherein determining the data transmission rate of the positioning tracking apparatus according to the data transmission rate limit value and the previous data transmission rate comprises:
calculating a difference value between the data transmission rate limit value and the previous data transmission rate to obtain a data transmission rate difference value; and
in a case where the data transmission rate difference value is less than or equal to a preset difference value threshold, determining the previous data transmission rate as the data transmission rate of the positioning tracking apparatus.

7. The control method according to claim 6, wherein after calculating the difference value between the data transmission rate limit value and the previous data transmission rate to obtain the data transmission rate difference value, the control method further comprises:
In a case where the data transmission rate difference value is greater than the preset difference value threshold, determining a gain value of the previous data transmission rate according to the data transmission rate difference value; and
accumulating the previous data transmission rate and the gain value of the previous data transmission rate to obtain the data transmission rate of the positioning tracking apparatus.

8. The control method according to any one of claims 1-3, wherein before determining the duration required for transmitting the data to be transmitted, the control method further comprises:
when the positioning tracking apparatus starts to transmit the data to be transmitted, determining a percentage of a remaining capacity of a battery to a total capacity of the battery in the positioning tracking apparatus; and
in a case where the percentage of the remaining capacity to the total capacity of the battery is less than or equal to a preset percentage threshold, determining the duration required for transmitting the data to be transmitted.

9. A positioning tracking apparatus, comprising a processor, a memory, a computer program stored on the memory and executable by the processor, and a data bus for implementing connection and communication between the processor and the memory, wherein the computer program is configured to, when executed by the processor, implements the steps of the control method for a positioning tracking apparatus according to any one of claims 1 to 8.

10. A storage medium for computer-readable storage, one or more programs are stored in the computer-readable storage medium, wherein the computer program is configured to, when executed by one or more processors to implement the steps of the control method for a positioning tracking apparatus according to any one of claims 1 to 8.
